# EUROPEAN PATENT SPECIFICATION

(11) **EP 3 248 887 B1**
(45) Date of publication and mention of the grant of the patent: **09.10.2019**
(21) Application number: 16380025.3
(22) Date of filing: 25.05.2016
(51) Int. Cl.: B64F 1/305

(54) **LIFT UNIT FOR A PASSENGER BOARDING BRIDGE**
HUBVORRICHTUNG FÜR EINE FLUGGASTBRÜCKE
UNITÉ DE LEVAGE POUR PASSERELLE D'EMBARQUEMENT DE PASSAGERS

(43) Date of publication of application: 29.11.2017
(73) Proprietor: thyssenkrupp Airport Solutions S.A., 33682 Mieres, Asturias (ES); thyssenkrupp AG, 45143 Essen (DE)
(72) Inventor: Espina, Manuel Hernandez, 33423 Pruvia, Asturias (ES); Bermejo, Antonio Murias, 33212 Gijón, Asturias (ES); Pemán, Alejandro Viesca, 33420 Lugones, Asturias (ES)
(74) Representative: thyssenkrupp Intellectual Property GmbH

(56) References cited:
- WO-A1-98/19910
- WO-A2-00/76847
- CA-A1- 2 247 663
- US-B1- 6 212 724
- "ibagli" ET AL: "File:LaGuardia Jetway.JPG - Wikimedia Commons", , 26 July 2009 (2009-07-26), XP055496164, Retrieved from the Internet: URL:https://commons.wikimedia.org/wiki/Fil e:LaGuardia_Jetway.JPG [retrieved on 2018-07-30]

## Description

### Technical field

The invention refers to a lift unit for a passenger boarding bridge.

### Technical background

A passenger boarding bridge of the claimed type connects an airplane with a terminal building via a tunnel. The tunnel may be extendible and comprises at least two tunnel sections, which can be telescoped for adjusting the length of the tunnel to the distance between an airplane door and the terminal building. The tunnel is movably supported by a drive unit, which can be mounted below the lift system. The lift unit is used to adjust the height of the tunnel so that the end of the tunnel facing the airplane is aligned to the door of the airplane. By using the drive unit the plane facing end of the tunnel can be moved towards the airplane and away from the airplane.

WO 2014/146758 A1 shows a respective passenger boarding bridge having a lift unit. Usually the components of the lift unit comprises predefined attachment points, to support an easy assembly of the passenger boarding bridge on site. Therefore some components of the lift unit support exactly one tunnel configuration, which reduces the ratio of common parts.

The webpage https://commons.wikimedia.org/wiki/File:LaGuardia_Jetway.JPG shows a passenger boarding having a lift with a plurality of holes. At some of the holes the tunnel is attached by means of bolts.

Other passenger boarding bridges are disclosed in US 6,212,724 B1, WO 00/76847 A2, CA 2 247 663 A1 and WO 98/19910 A1.

### Summary of the invention

It is an object of the present invention to develop an improved lift unit for a passenger boarding bridge, thereby in particular increasing the ratio of common parts used in the installation of passenger boarding bridges. The object of the invention is solved by a lift unit, a passenger boarding bridge and a method according to the main claims. Preferred embodiments are subject of the subclaims and the description.

According to the invention the lift unit for a passenger boarding bridge comprises a cross member and two elevating posts, which are mounted at two opposite ends of the cross member. Each elevating post comprises a lower tube and an upper tube, which can be telescoped my means of an actuating device, in particular a hydraulic device. The lower tube is adapted to being supported by the cross member, and the upper tube is adapted to carry a tunnel of the passenger boarding bridge. The lift unit is adapted, that tunnels of various cross sections can be mounted to the lift unit.

The idea of the invention is to provide the possibility to assemble the elevating posts at the cross member or at the tunnel in various positions on site. That means in reverse, that for different kinds of tunnels, always the same lift components can be used. This results in an increasing ratio of common parts.

To define a valid fixing position or a valid support position an arrangement of mounting holes at both fixings /supports must be aligned to each other.

In an embodiment the upper lift tube comprises a lift-side fixing, defining a plurality of fixing positions, at which a tunnel-side fixing can be attached. The fixing may comprise one or more fixing elements. The tunnel-side fixing is attached at the tunnel. The lift-side fixing may comprise a plurality of mounting holes, arranged on top of each other, wherein a variety of different selections of the mounting holes each defining a respective fixing position.

The lift-side fixing may comprises more mounting holes than are required by the tunnel-side fixing and/or than fixing holes are provided at the respective tunnel-side fixing. The increased number of mounting holes provides the increased number of fixing positions, from which one can be selected according to the requirements caused by the cross section of the used tunnel.

In a particular embodiment the lift-side fixing is hidden by the elevating tube, when viewed in side view. The increased number of fixing positions usually requires increased fixing brackets or other fixing elements, which may negatively influence the slender appearance of the tunnel which in most cases is an aesthetic construction of steel and glass. Therefore the mounting holes of the fixing may be aligned perpendicular to the direction of the cross member. This may also support easy access for a wrenching tool.

According to the invention the cross member comprises a cross-member-side support defining a plurality of support positions, at which a tube-side support can be attached. The tube-side support can comprise one of more support elements. The tube-side support is attached at the lower lift tube.

The cross-member-side support comprises a plurality of mounting holes, arranged side-by-side, wherein a variety of different selections of the mounting holes each defining a respective support position wherein a variety of different selections of the mounting holes each defining a respective support position.

The cross-member-side support comprises at least at one end, in particular at both ends, more mounting holes than required by the tube-side support, and/or than fixing holes are provided at the respective tube-side support. The increased number of mounting holes provides the increased number of support positions, from which one can be selected according to the requirements caused by the cross section of the used tunnel.

In an embodiment the cross-member has an H-shaped cross section. The H-shaped cross-member may define at least one three-sided bordered stowage area, in particular two three-sided bordered stowage areas, in at least one of which a duct or a control box is located. The stowage area is open to one side. The open side is easy accessible for introducing boxes or ducts in the stowage area. The stowage area, in particular the open side, may be covered by a removable cover, which may provide a weather protection and/or a more aesthetic appearance.

Preferably the mounting holes for mounting the lift to the cross member or to the tunnel are designed as passing holes. This enables the use of a screwed connection comprising a screw and a separate nut. This supersedes the provision of threaded holes in the fixings and/or support. The use of the H-profiled cross-member supports the use of passing holes because the inner area of the cross member is accessible for a wrenching tool.

The inventive method for installation of a described passenger boarding bridge comprises the following steps:
- Providing data of the tunnel, the data contain information of the cross section of the tunnel (the information may be a reference to a more detailed set of data, stored in a separate database);
- Selecting one of a plurality of fixing positions and/or one of a plurality of support positions, wherein the step of selecting is performed in consideration of the provided data,
- Mounting the tunnel to the upper tube at the selected fixing position and/or mounting the elevating post to the cross member at the selected support position.

In an embodiment the method further comprising the following steps: installing of ducts and or boxes into the stowage area, subsequently covering an open side of the stowage area by a cover.

### In an embodiment the method further comprising the following steps:

During Mounting Establishing a screwed connection of a screw and a nut between the tube-side support and the cross-member-side support, thereby Inserting a screw through mounting holes in the tube-side support and the cross-member-side support and arranging a head of the screw or a respective nut in the stowage area, Tightening the screwed connection by means of a tightening tool, in particular a screw wrench, thereby extending the tightening tool into the stowage area.

### Brief description of the drawings

The invention is described in more detail with the help of the drawings, the figures show:
- fig. 1: the principal structure of a passenger boarding bridge in front view, to which the invention is applied to;
- fig. 2: the passenger boarding bridge from figure 1 in a principal partial side view;
- fig. 3: details of the inventive lift unit schematically in an exploded front view;
- fig. 4: details of the inventive lift unit schematically in an exploded side view;
- fig. 5: details of the inventive lift unit schematically in an exploded top view;
- fig. 6: the cross member of the lift unit schematically in an enlarged cross section.

### Description of the preferred embodiment

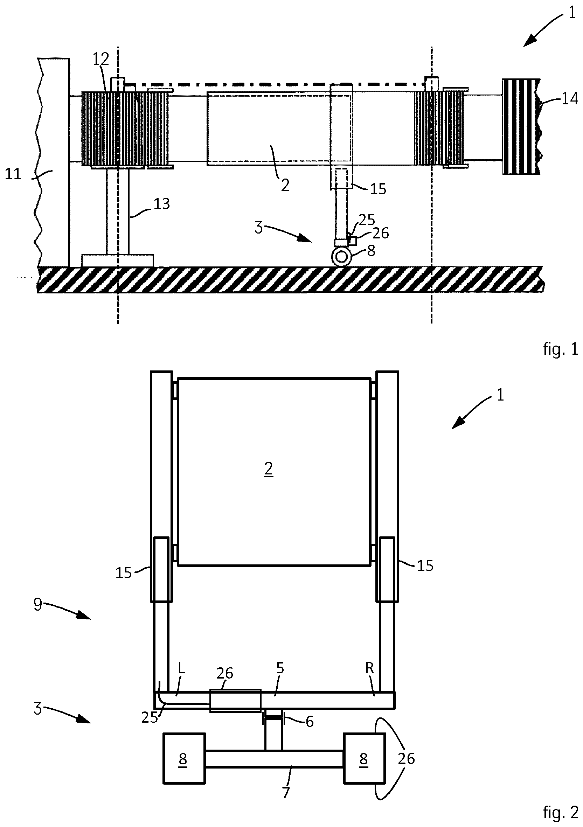

Figures 1 and 2 show a passenger boarding bridge 1, as in principal is disclosed e.g. in WO 2014/146758 A1. The passenger boarding bridge 1 comprises a swiveling and extendible tunnel 2. A first end of the tunnel 2 is pivotably connected via a rotunda 12 to a terminal building 11. The rotunda 12 is supported by a stationary pillar 13. On a second end of the tunnel 2 the passenger boarding bridge 1 comprises a canopy 14, which serves for establishing a weatherproof passage between an airplane (non shown) and the tunnel 2.

The tunnel 2 is movably supported by a drive unit 3, so that the tunnel 2 can be swiveled around the rotunda 12 and the tunnel 2 can be extended. The drive unit 3 comprises a number of wheels 8. A lifting assembly 9 is arranged between the drive unit 3 and the tunnel 2, so that the height of the canopy 14 can be individually adjusted to the height of a door of the airplane.

The wheels 8 of the drive unit 3 are rotatably supported by a wheel support 7. The wheel supported 7 is connected by a bearing 6 to the lift unit 9, so that the driving direction of the drive unit 3 can be varied.

A lift unit 9 comprises a cross member 5 located below the tunnel 2 and arranged perpendicular to the main direction of the tunnel 2. At both ends L, R of the cross member 5 a hydraulic lifting device 15 for the lifting the tunnel 2 is positioned.

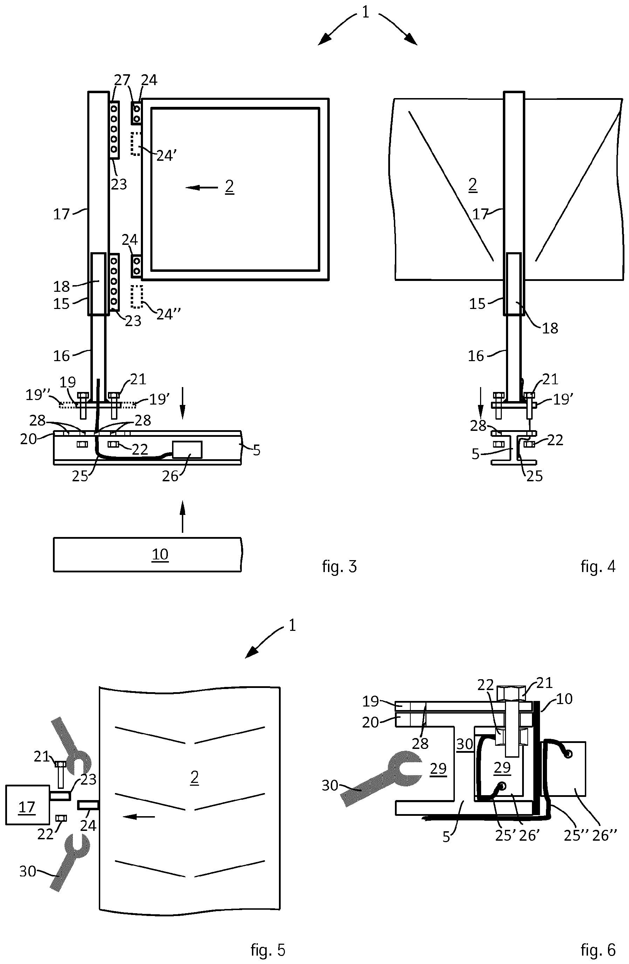

Figures 3 to 6 show parts of the inventive passenger boarding bridge in more detail.

The elevating post 15 comprises a lower tube 16 and an upper tube 17, which can be telescoped by means of a hydraulic device 18. The upper tube comprises two lift-side fixing brackets 23, which have a number of mounting holes 27. Accordingly the tunnel 2 has two tunnel-side fixing brackets 24, having a number of mounting holes 27. By means of a screws 21 and nut 22 the tunnel-side fixing bracket 24 can be mounted to the lift-side fixing brackets 23, so that the tunnel is mounted at the lift unit 9.

As apparent from figure 3 the lift-side fixing brackets 23 comprise a greater number of mounting holes 27 than are required by the tunnel-side fixing bracket 24. Thus the tunnel-side fixing bracket 24 can be in principal mounted at different positions at the lift-side fixing brackets 23. Respective other positions for mounting the tunnel-side brackets are apparent from the dotted brackets 24', 24". The number of holes 27 shown in the figures is merely for illustration purposes. The number of mounting holes defines the number of mounting positions, so the number may vary depending on the desired mounting positions.

By using the position at 24" a larger (in height direction) tunnel can be mounted; by using the position at 24' a smaller (in height direction) tunnel can be mounted.

The lower tube 16 is connected by a further screwed connection to the cross member 5. Therefore the lower tube 16 comprise a tube-side support plate 19 having a number of mounting holes 28. Accordingly the cross member has a cross member-side support plate 20, having a number of mounting holes 28 aligned to the mounting holes of the tube-side support plate 19. The tube-side support plate 19 may be welded to the lower tube 16.

As apparent from figure 3 there is a greater number of mounting holes 28 provided at the cross-member-side support plate 20 than on the tube-side support plate 19. Thus the tube-side support plate 19 can be in principal mounted at different positions at the cross-member-side support plate 20. Respective other positions for mounting the tube-side support plate are apparent from the dotted plate 19', 19".

The bracket 23, 24 are in side view completely hidden by the tubes 16, 17, as can be seen in figure 4. Thus the slender appearance of the passenger boarding bridge 6 which mostly comprises glass and steel architecture is not negatively affected by the brackets 23, 24. The axis of the mounting holes 27 at the brackets 23, 24 are arranged parallel to the extension of the tunnel 2. Thus the screws 21 and the nuts 22 can be easily accessed by a screw-wrench 30, as shown in figure 5.

As shown in figures 4 and 6 the cross member 5 has an H-shaped cross-section. This H-shapes establishes two stowage areas 29 at both sides of a vertical web 30, which are enclosed in three sides by the cross-member 5. One side is open which can be easily closed by a protective cover 10, as shown in figure 6. As long as the cover 10 is removed a technician has easy access to install or to service first ducts 25' or first units 26' in the stowage area 29. Afterwards the cover 10 can be assembled, so that the installations are not visible anymore, which supports the slender appearance. Further the installations are weather protected.

Additionally the outer side of the cover 10 can be used to attach more installations like a second duct 25" and a second control or hydraulic power unit 26". So the new design is capable of accommodation more installations on the same installation space, thereby ensuring easy access to the installations.

In passenger boarding bridges according to the prior art the cross members are usually O-shaped. This makes it difficult to use the interior spacing for installations like ducts and boxes. The mounting of screws has to be performed with threaded mounting holes at the cross member, which is not favored.

### List of reference signs

- 1: passenger boarding bridge
- 2: tunnel
- 3: drive unit
- 4: lifting mechanism
- 5: cross member (H-shaped cross section)
- 6: bearing
- 7: wheel support
- 8: wheel
- 9: lift unit
- 10: protective cover
- 11: terminal building
- 12: rotunda
- 13: rotunda column
- 14: bridgehead with canopy
- 15: elevating post
- 16: lower tube
- 17: upper tube
- 18: hydraulic device
- 19: tube-side support plate
- 20: cross-member-side support plate
- 21: screw
- 22: nut
- 23: lift-side fixing bracket
- 24: tunnel-side fixing bracket
- 25: (electric or hydraulic) duct
- 26: control unit / hydraulic power unit
- 27: mountings hole at fixing bracket
- 28: mounting hole at support plate
- 29: stowage area
- 30: vertical web

- L: left end
- R: right end

## Claims

1. Lift unit (9) for a passenger boarding bridge (1), comprising
- a cross member (5),
- two elevating posts (15), mounted at two opposite ends (L, R) of the cross member (5),
each elevating post (15) comprising a lower tube (16) and an upper tube (17), which can be telescoped by means of an actuating device (18), in particular a hydraulic device,
the lower tube (16) is adapted to being supported by the cross member (5),
the upper tube (17) is adapted to carry a tunnel (2) of the passenger boarding bridge (1),
the cross member (5) comprises a cross-member-side support (20) defining a plurality of support positions, at which a tube-side support (19) can be attached,
**characterized in**
**that** the cross-member-side support (20) comprises a plurality of mounting holes (28), arranged side-by-side, wherein a variety of different selections of the mounting holes (27) each defining a respective support position,
and **that** the cross-member-side support (20) comprises at least at one end (L, R), in particular at both ends, more mounting holes (28)
- than required by the tube-side support (19), and/or
- than fixing holes (28) are provided at the respective tube-side support (19).

2. Lift unit (9) according to the preceding claim,
**characterized in**
**that** the upper lift tube (17) comprises a lift-side fixing (23), defining a plurality of fixing positions, at which a tunnel-side fixing (24) can be attached.

3. Lift unit (9) according to the preceding claim,
**characterized in**
**that** the lift-side fixing (23) comprises a plurality of mounting holes (27), arranged on top of each other, wherein a variety of different selections of the mounting holes (27) each defining a respective fixing position.

4. Lift unit (9) according to the preceding claim,
**characterized in**
**that** the lift-side fixing (23) comprises more mounting holes (27)
- than required by the tunnel-side fixing (24), and/or
- than fixing holes (27) are provided at the respective tunnel-side fixing (24).

5. Lift unit (9) according to any of claims 2 to 4,
**characterized in**
**that** the lift-side fixing (23) is hidden by the elevating tube (15), when viewed in side view.

6. Lift unit (9) according to any of claims 2 to 5,
**characterized in**
**that** the mounting holes (27) of the fixing (23, 24) are aligned perpendicular to the direction of the cross member (5).

7. Lift unit (9) according to any of the preceding claims,
**characterized in**
the cross-member (5) has a H-shaped cross-section, in particular defining at least one, in particular a plurality of, three-sided bordered stowage areas (29), in at least one of which a first duct (25'), a first control unit (26') and/or a first hydraulic power unit (26') is located.

8. Lift unit (9) according to the preceding claim,
**characterized in**
**that** the stowage area (29) is covered by a removable cover (10), in particular at the outer side of the cover (10) a second duct (25"), a second control unit (26') and/or a second hydraulic power unit (26") is attached.

9. Lift unit (9) according to any of the preceding claims,
**characterized in**
**that** mounting holes (27, 28) for mounting the lift (15) to the cross member (5) or to the tunnel (2) are designed as passing holes.

10. Passenger boarding bridge, comprising a lift unit (9) according to any of the preceding claims.

11. Method for installation of a passenger boarding bridge according to any of the preceding claims, comprising the following steps:
- **Providing** data of the tunnel (2), the data contain information of a cross section of the tunnel (2);
- **Selecting** one of a plurality of fixing positions and/or one of a plurality of support positions, wherein the step of selecting is performed in consideration of the provided data,
- **Mounting** the tunnel (2) to the upper tube (17) at the selected fixing position and/or **mounting** the lower tube (16) to the cross member (5) at the selected support position.

12. Method according to the previous claims, for installation of a passenger boarding bridge comprising a lift unit according to claim 7 or 8, further comprising the following steps:
**Installing** of ducts (25) or units (26) into the stowage area (29),
subsequently **covering** an open side of the stowage area (29) by a cover (10).

13. Method according to claim 11 or 12, for installation of a passenger boarding bridge (1) comprising a lift unit (9) according to claim 7 and 9, further comprising the following steps:
During Mounting **Establishing** a screwed connection (21, 22) of a screw (21) and a nut (22) between the tube-side support (19) and the cross-member-side support (20),
Thereby **Inserting** a screw (21) through mounting holes (28) in the tube-side support (19) and the cross-member-side support (20) and arranging a head of the screw (21) or a respective nut (22) in the stowage area (29),
**Thightening** the screwed connection by means of a tightening tool (30), in particular a screw wrench (30), thereby extending the tightening tool (30) into the stowage area (29).

## Patentansprüche

1. Hubvorrichtung (9) für eine Fluggastbrücke (1), umfassend
- einen Querträger (5),
- zwei Hubsäulen (15), die an zwei gegenüberliegenden Enden (L, R) des Querträgers (5) befestigt sind,
wobei jede Hubsäule (15) ein unteres Rohr (16) und ein oberes Rohr (17) umfasst, die mittels einer Betätigungsvorrichtung (18), insbesondere einer Hydraulikvorrichtung, ineinandergeschoben werden können,
wobei das untere Rohr (16) geeignet ist, von dem Querträger (5) gestützt zu werden,
wobei das obere Rohr (17) geeignet ist, einen Tunnel (2) der Fluggastbrücke (1) zu tragen,
wobei der Querträger (5) eine querträgerseitige Stütze (20) umfasst, die eine Mehrzahl von Stützpositionen definiert, an denen eine rohrseitige Stütze (19) angebracht werden kann,
**dadurch gekennzeichnet, dass**
die querträgerseitige Stütze (20) eine Mehrzahl von nebeneinander angeordneten Befestigungsbohrungen (28) umfasst, wobei eine Vielzahl von unterschiedlichen Auswahlen der Befestigungsbohrungen (27) jeweils eine entsprechende Stützposition definiert,
und dass die querträgerseitige Stütze (20) wenigstens an einem Ende (L, R), insbesondere an beiden Enden, mehr Befestigungsbohrungen (28) umfasst
- als für die rohrseitige Stütze (19) erforderlich sind und/oder
- als Fixierungsbohrungen (28) an der entsprechenden rohrseitigen Stütze (19) vorgesehen sind.

2. Hubvorrichtung (9) nach dem vorhergehenden Anspruch,
**dadurch gekennzeichnet, dass**
das obere Hubrohr (17) eine hubsäulenseitige Fixierung (23) umfasst, die eine Mehrzahl von Fixierungspositionen definiert, an denen eine tunnelseitige Fixierung (24) angebracht werden kann.

3. Hubvorrichtung (9) nach dem vorhergehenden Anspruch,
**dadurch gekennzeichnet, dass**
die hubsäulenseitige Fixierung (23) eine Mehrzahl von übereinander angeordneten Befestigungsbohrungen (27) umfasst, wobei eine Vielzahl von unterschiedlichen Auswahlen der Befestigungsbohrungen (27) jeweils eine entsprechende Fixierungsposition definiert.

4. Hubvorrichtung (9) nach dem vorhergehenden Anspruch,
**dadurch gekennzeichnet, dass**
die hubsäulenseitige Fixierung (23) mehr Befestigungsbohrungen (27) umfasst
- als für die Fixierung (24) erforderlich sind und/oder
- als Fixierungsbohrungen (27) an der entsprechenden tunnelseitigen Fixierung (24) vorgesehen sind.

5. Hubvorrichtung (9) nach einem der Ansprüche 2 bis 4,
**dadurch gekennzeichnet, dass**
die hubsäulenseitige Fixierung (23) in einer Seitenansicht von dem Hubrohr (15) verdeckt ist.

6. Hubvorrichtung (9) nach einem der Ansprüche 2 bis 5,
**dadurch gekennzeichnet, dass**
die Befestigungsbohrungen (27) der Fixierung (23, 24) rechtwinklig zu der Richtung des Querträgers (5) ausgerichtet sind.

7. Hubvorrichtung (9) nach einem der vorhergehenden Ansprüche,
**dadurch gekennzeichnet, dass**
der Querträger (5) einen H-förmigen Querschnitt aufweist, insbesondere wenigstens einen, insbesondere eine Mehrzahl von dreiseitig begrenzten Staubereichen (29) definiert, wobei in wenigstens einem von diesen ein erster Kanal (25'), eine erste Steuereinheit (26') und/oder eine erste Hydraulikeinheit (26') festgelegt sind bzw. ist.

8. Hubvorrichtung (9) nach dem vorhergehenden Anspruche,
**dadurch gekennzeichnet, dass**
der Staubereich (29) mit einer abnehmbaren Abdeckung (10) abgedeckt ist, wobei insbesondere an der Außenseite der Abdeckung (10) ein zweiter Kanal (25"), eine zweite Steuereinheit (26') und/oder eine zweite Hydraulikeinheit (26") angebracht sind bzw. ist.

9. Hubvorrichtung (9) nach einem der vorhergehenden Ansprüche,
**dadurch gekennzeichnet, dass**
Befestigungsbohrungen (27, 28) zum Befestigen der Hubsäule (15) an dem Querträger (5) oder an dem Tunnel (2) als Durchgangsbohrungen ausgeführt sind.

10. Fluggastbrücke, umfassend eine Hubvorrichtung (9) nach einem der vorhergehenden Ansprüche.

11. Verfahren zur Installation einer Fluggastbrücke nach einem der vorhergehenden Ansprüche, umfassend die folgenden Schritte:
- **Bereitstellen** von Daten über den Tunnel (2), wobei die Daten Informationen über einen Querschnitt des Tunnels (2) enthalten,
- **Auswählen** einer aus einer Mehrzahl von Fixierungspositionen und/oder eine aus einer Mehrzahl von Stützpositionen, wobei der Schritt des Auswählens unter Berücksichtigung der bereitgestellten Daten durchgeführt wird,
- **Befestigen** des Tunnels (2) an dem oberen Rohr (17) an der ausgewählten Fixierungsposition und/oder **Befestigen** des unteren Rohrs (16) an dem Querträger (5) an der ausgewählten Stützposition.

12. Verfahren nach dem vorhergehenden Anspruch, zur Installation einer Fluggastbrücke, die eine Hubvorrichtung nach Anspruch 7 oder 8 umfasst, ferner umfassend die folgenden Schritte:
**Installieren** von Kanälen (25) oder Einheiten (26) in dem Staubereich (29),
anschließendes **Abdecken** einer offenen Seite des Staubereichs (29) mit einer Abdeckung (10).

13. Verfahren nach Anspruch 11 oder 12, zur Installation einer Fluggastbrücke (1), die eine Hubvorrichtung (9) nach Anspruch 7 und 9 umfasst, ferner umfassend die folgenden Schritte:
während der Befestigung **Herstellen** einer eine Schraube (21) und eine Mutter (22) aufweisenden Schraubverbindung (21, 22) zwischen der rohrseitigen Stütze (19) und der querträgerseitigen Stütze (20),
dadurch **Einsetzen** einer Schraube (21) durch Befestigungslöcher (28) in der rohrseitigen Stütze (19) und der querträgerseitigen Stütze (20) und Anordnen eines Kopfs der Schraube (21) oder einer entsprechenden Mutter (22) in dem Staubereich (29),
**Anziehen** der Schraubverbindung mittels eines Anziehwerkzeugs (30), insbesondere eines Schraubenschlüssels (30), und dadurch Ausfahren des Anziehwerkzeugs (30) in den Staubereich (29).

## Revendications

1. Unité de levage (9) pour une passerelle d'embarquement de passagers (1), comprenant
- un élément transversal (5),
- deux montants élévateurs (15), montés à deux extrémités opposées (L, R) de l'élément transversal (5), chaque montant élévateur (15) comprenant un tube inférieur (16) et un tube supérieur (17), lesquels peuvent s'emboîter de manière télescopique au moyen d'un dispositif d'actionnement (18), en particulier d'un dispositif hydraulique,
le tube inférieur (16) est adapté pour être supporté par l'élément transversal (5),
le tube supérieur (17) est adapté pour supporter un tunnel (2) de la passerelle d'embarquement de passagers (1),
l'élément transversal (5) comprend un support (20) côté élément transversal définissant une pluralité de positions de support, auquel un support (19) côté tube peut être fixé,
**caractérisée**
**en ce que** le support (20) côté élément transversal comprend une pluralité de trous de montage (28), agencés côte à côte, une multiplicité de sélections différentes des trous de montage (27) définissant chacune une position de support respective,
et **en ce que** le support (20) côté élément transversal comprend au moins à une extrémité (L, R), en particulier aux deux extrémités, plus de trous de montage (28)
- que requis par le support (19) côté tube, et/ou
- que de trous de fixation (28) qui sont prévus au niveau du support (19) côté tube respectif.

2. Unité de levage (9) selon la revendication précédente,
**caractérisée**
**en ce que** le tube de levage supérieur (17) comprend une fixation (23) côté levage, définissant une pluralité de positions de fixation, à laquelle une fixation (24) côté tunnel peut être fixée.

3. Unité de levage (9) selon la revendication précédente,
**caractérisée**
**en ce que** la fixation (23) côté levage comprend une pluralité de trous de montage (27), agencés les uns au-dessus des autres, une multiplicité de sélections différentes des trous de montage (27) définissant chacune une position de fixation respective,

4. Unité de levage (9) selon la revendication précédente,
**caractérisée**
**en ce que** la fixation (23) côté levage comprend plus de trous de montage (27)
- que requis par la fixation (24) côté tunnel, et/ou
- que de trous de fixation (27) qui sont prévus au niveau de la fixation (24) côté tunnel respective.

5. Unité de levage (9) selon l'une quelconque des revendications 2 à 4,
**caractérisée**
**en ce que** la fixation (23) côté levage est cachée par le tube élévateur (15), lorsque vue en vue de côté.

6. Unité de levage (9) selon l'une quelconque des revendications 2 à 5,
**caractérisée**
**en ce que** les trous de montage (27) de la fixation (23, 24) sont alignés perpendiculairement à la direction de l'élément transversal (5).

7. Unité de levage (9) selon l'une quelconque des revendications précédentes,
**caractérisée**
**en ce que** l'élément transversal (5) présente une section transversale en forme de H, en particulier définissant au moins une, en particulier une pluralité de zones de rangement (29) bordées sur trois côtés, dans au moins l'une desquelles sont situées une première conduite (25'), une première unité de commande (26') et/ou une première unité de puissance hydraulique (26').

8. Unité de levage (9) selon la revendication précédente,
**caractérisée**
**en ce que** la zone de rangement (29) est recouverte par un couvercle amovible (10), et en particulier au niveau du côté extérieur du couvercle (10) sont fixées une deuxième conduite (25"), une deuxième unité de commande (26') et/ou une deuxième unité de puissance hydraulique (26").

9. Unité de levage (9) selon l'une quelconque des revendications précédentes,
**caractérisée**
**en ce que** les trous de montage (27, 28) pour le montage du dispositif de levage (15) sur l'élément transversal (5) ou sur le tunnel (2) sont conçus en tant que trous de passage.

10. Passerelle d'embarquement de passagers, comprenant une unité de levage (9) selon l'une quelconque des revendications précédentes.

11. Procédé pour l'installation d'une passerelle d'embarquement de passagers selon l'une quelconque des revendications précédentes, comprenant les étapes suivantes :
- fourniture de données relatives au tunnel (2), les données contenant des informations relatives à une section transversale du tunnel (2) ;
- sélection d'une parmi une pluralité de positions de fixation et/ou d'une parmi une pluralité de positions de support, l'étape de sélection étant effectuée en tenant compte des données fournies,
- montage du tunnel (2) sur le tube supérieur (17) à la position de fixation sélectionnée et/ou montage du tube inférieur (16) sur l'élément transversal (5) à la position de support sélectionnée.

12. Procédé selon les revendications précédentes, pour l'installation d'une passerelle d'embarquement de passagers comprenant une unité de levage selon la revendication 7 ou 8, comprenant en outre les étapes suivantes :
installation de conduites (25) ou d'unités (26) à l'intérieur de la zone de rangement (29),
ensuite recouvrement d'un côté ouvert de la zone de rangement (29) par un couvercle (10).

13. Procédé selon la revendication 11 ou 12, pour l'installation d'une passerelle d'embarquement de passagers (1) comprenant une unité de levage (9) selon les revendications 7 et 9, comprenant en outre les étapes suivantes :
pendant le montage, réalisation d'une liaison vissée (21, 22) d'une vis (21) et d'un écrou (22) entre le support (19) côté tube et le support (20) côté élément transversal,
insertion ainsi d'une vis (21) à travers des trous de montage (28) dans le support (19) côté tube et le support (20) côté élément transversal et agencement d'une tête de la vis (21) ou d'un écrou (22) respectif dans la zone de rangement (29),
serrage de la liaison vissée au moyen d'un outil de serrage (30), en particulier d'une clé à molette (30), en étendant ainsi l'outil de serrage (30) à l'intérieur de la zone de rangement (29).
